Europäisches Patentamt

European Patent Office

Office européen des brevets

(11) Publication number: **0 174 119**
**B1**

(12) **EUROPEAN PATENT SPECIFICATION**

(45) Date of publication of patent specification: **19.07.89**   (51) Int. Cl.⁴: **F 16 F 9/44**

(21) Application number: **85305781.8**

(22) Date of filing: **14.08.85**

(54) Hydraulic damping unit.

(30) Priority: **04.09.84 US 646843**

(43) Date of publication of application:
**12.03.86 Bulletin 86/11**

(45) Publication of the grant of the patent:
**19.07.89 Bulletin 89/29**

(84) Designated Contracting States:
**DE FR GB IT**

(56) References cited:
**EP-A-0 207 409**
**GB-A-2 111 168**
**US-A-3 827 538**

(73) Proprietor: **GENERAL MOTORS CORPORATION**
**General Motors Building 3044 West Grand**
**Boulevard**
**Detroit Michigan 48202 (US)**

(72) Inventor: **Fannin, Wayne Vincent**
**2098 Upper Bellbrook Road**
**Xenia Ohio 45385 (US)**
Inventor: **Buchanan, Harry Charles, Jr.**
**1274 Timberwyck Court**
**Spring Valley Ohio 45370 (US)**

(74) Representative: **Breakwell, John Neil Bower**
**et al**
**GM Patent Section Vauxhall Motors Limited**
**Luton Office (F6) P.O. Box No. 3 Kimpton Road**
**Luton Bedfordshire LU2 0SY (GB)**

EP 0 174 119 B1

Courier Press, Leamington Spa, England.

## Description

This invention relates to a hydraulic damping unit as specified in the preamble of claim 1, for example as disclosed in US-A-3 827 538.

Prior to the present invention, various hydraulic dampers, i.e. telescopic shock absorbers and struts have been engineered with selectively variable orificing to control oil flow through the piston as it strokes in the cylinder tube to thereby control the action of the vehicle suspension springs associated therewith. Generally such dampers involve costly and relatively complex blow-off valving and controls, and are not suitable for quantity production.

Thus, for example, in the aforesaid US-A-3 827 538 a hydraulic damping unit is disclosed in which a piston of the assembly incorporates a valve assembly which uses a pair of disc-shaped flap valves to control fluid flow through a plurality of axially-extending flow passageways in the piston arranged symmetrically around the axis of the piston at the same radial distance therefrom. Additionally, the valve assembly includes a pair of rotatable disc valves within the piston, each of which has a plurality of apertures formed therethrough which are arranged symmetrically with respect to the axis of the piston and have different predetermined shapes. Variation in the rates of fluid flow through the axially-extending passageways is achieved by rotating the disc valves relative to one another so as to open, close or partially obscure various ones of the axially-extending passageways. The disc valves are rotated relative to one another to achieve this flow rate variation by means of two rotatable sleeves, nested one within the other, which are rotatably mounted within a hollow piston rod connected to the piston, and are connected to a pulley and cable plus pinion and rack control system external of the damper unit. Adjustment of this control system in varying ways can be carried out either manually or automatically in order to obtain varying degrees of control of the damping effect produced by the damping unit both in the compression stroke and the rebound stroke. Although such a hydraulic damper unit can be made to function so as to produce many variations in the damping effect, there are many components required in the mechanism which require manufacturing to a high degree of accuracy, and the assembly of the mechanism needs to be carried out accurately, thus making the hydraulic damper unit expensive to manufacture and assemble.

In contrast to such prior dampers, the present invention is concerned with a hydraulic damping unit utilising a new and improved deflection valve and valve control system for hydraulic control which eliminates the complexities and costs of prior variable-damping units and provides improved and precision control of fluid flow through the shockabsorber piston to vary the rebound characteristics of the damper.

To this end a hydraulic damping unit in accordance with the present invention is characterised by the features specified in the characterising portion of claim 1.

In a preferred arrangement in accordance with the invention, a telescopic hydraulic damper incorporates a rotatable selector plate mounted above a fixed orifice plate. The selector plate is movable in response to controls to various rotated positions to select orifice size and radial position of the orificing from a centre to control the fluid force and the resulting amount of deflection of a spring disc pack mounted beneath the orifice plate. In this arrangement, hydraulic damping characteristics are varied and selected for controlling piston velocity and suspension spring damping during rebound, inasmuch as the resulting amount of deflection of the spring disc pack mounted beneath the orifice plate is predetermined to control fluid flow through the piston. Orifice plate rotation is externally controlled by means of a rotatable shaft extending through the piston rod from an external, motor-type actuator, although the shaft could alternatively be rotated by an internal motor-type actuator. Orificing adjacent to the centre of the valve spring disc pack is selected so that orifice opening is optimized and close to the anchor (fulcrum) point of the spring disc pack. With this orifice selection, the disc pack deflection is low, the flow restriction through the piston is maximized, and resistance to piston movement is high in the rebound mode of operation. This reduces piston velocities and provides for stiffer (harder) ride characteristics that may be desired under certain vehicle operating conditions such as high-speed cornering. On rotation to a second (intermediate) position, the orifice size is optimized for medium (intermediate) damping action. This is achieved by moving the open orifices further from the fulcrum point so that plate deflection may be increased and flow through the piston is increased. Under such intermediate condition, the resistance of the fluid within the damper to piston stroking on rebound is reduced: with this reduced resistance, piston velocity increases and the resulting ride is softer.

In a third position or setting, the orifice size is optimized for soft ride and moved further from the centre (fulcrum) of the disc pack. Under such conditions, the fluid forces on the spring disc pack will be further from the centre and effect deflection of the disc pack so that the spring-damping characteristics of the shock absorber are reduced. If even softer rides are desired, the number, location and size of the orifices can be engineered to provide for additional flow through the piston with accompanying deflection of the spring disc pack.

With these selected orifice settings, the damper converts rebound motions into heat at selected rates so that road bumps are cushioned as may be desired by the vehicle operator. If desired, deflection of the spring disc pack can be the same for all settings, and the flow can be controlled by the amount of spring deflection, the size and radius of the orifices from the centre, and the curvature of the backing plate for the spring disc pack.

In the drawings:

Figure 1 is an elevational view, partially in section, of a preferred embodiment of a hydraulic damper in accordance with the present invention;

Figure 2 is a sectional view generally along the line 2--2 of Figure 1, in the direction of the arrows, showing a piston assembly in conformity with the present invention;

Figure 3 is a cross-sectional view along the line 3--3 of Figure 2, in the direction of the arrows, showing a selector plate and an orifice plate relatively rotated to one of a plurality of operating positions for controlling fluid flow through the piston assembly during rebound;

Figures 4 and 5 are views similar to that of Figure 3, showing additional relatively rotated positions of the selector and orifice plates in conformity with this invention to change the spring-damping characteristics of the damper;

Figures 6 and 7 are fragmentary sectional views showing a portion of a valve orifice plate and a spring plate disc pack to show the action thereof under certain conditions of operation which correspond generally to the views of Figures 4 and 3 respectively; and

Figure 8 is a graph illustrating operation of a hydraulic damper in accordance with the present invention.

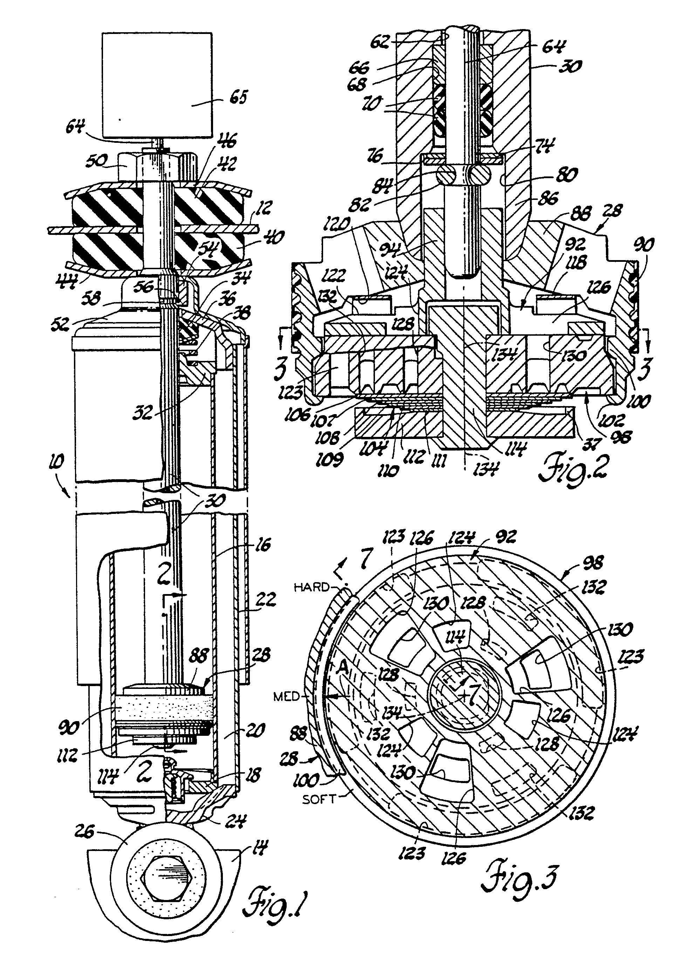

With reference now to the drawings, there is shown in Figure 1 a double-acting hydraulic damper 10 operatively mounted between sprung and unsprung components of the vehicle here represented by an upper support plate 12 connected to the vehicle bodywork (sprung mass of the vehicle) and a lower control arm 14 which is mounted to a steering knuckle and road wheel assembly (unsprung mass of the vehicle). The damper 10 incorporates an elongate cylinder tube 16 having a conventional base valve 18 secured in the lower end thereof which controls the passage of oil (as hydraulic fluid) between the cylinder tube and a surrounding oil reservoir 20 formed between the cylinder tube and a reservoir tube 22. The reservoir tube 22 is closed at its lower end by a base cup 24 on which the base valve 18 is seated. A lower mount 26 welded to the exterior of the base cup provides the connection to the control arm 14. A valved piston assembly 28 and connected piston rod 30 are operatively mounted for linear stroking movement in the cylinder tube 16 during shock absorber operation. The piston rod 30 extends upwardly from the piston assembly 28 through a conventional rod guide 32 mounted in the upper end of the cylinder tube. The piston rod 30 further extends through an annular elastomeric seal 34 and through a cup-like seal cover 36 whose peripheral flange fits into and is welded to the upper end of the reservoir tube 22. A helical spring 38 seated on the rod guide 32 and around the piston rod 30 yieldably holds the seal 34 against the inner surface of the seal cover 36. The upper end of the piston rod 30 extends through a pair of elastomeric mounting discs 40 and 42 and surrounding backing plates 44 and 46 disposed on opposite sides thereof to sandwich the support plate therebetween by the action of a nut 50 threadedly received on the end of the piston rod 30.

A cup-like upper cover plate 52 through which the piston rod 30 extends is connected to the piston rod immediately below the backing plate 44 by a cylindrical retainer 54 and a co-operating snap ring 56 received in a groove 58 in the piston rod 30. The elastomeric mounting discs 40 and 42, being effectively trapped between the upper and lower plates 46 and 44, isolate the piston rod from the vehicle body. The piston rod 30 has a central bore 62 for receiving an elongate actuator shaft 64 that extends therethrough.

The actuator shaft 64 is arranged to be driven by a motor 65, and is operatively connected to valving in the piston assembly described below. As shown, the actuator shaft 64 is rotatably mounted in a cylindrical bearing 66 which is press-fitted within a small-diameter counterbore 68 in the lower end of the piston rod 30. O-ring seals 70 fitted on the actuator shaft 64 below the bearing 66 contact the walls of the counterbore to block the passage of shock absorber oil through the central bore 62 to the exterior of the damper. The actuator shaft 64 is retained in the central bore 62 of the piston rod 30 by washers 74 seated against end walls 76 of a larger-diameter counterbore 80 formed in the piston rod, and by a stop ring 82 fitted into a transverse annular groove 84 in the actuator shaft 64 at the lower side of the washer 74. With such a construction, the shaft 64 cannot be inadvertently withdrawn from the piston rod 30.

The inner end 86 of the piston rod 30 is welded or otherwise fastened to a cylindrical shell-like main body 88 of the piston assembly 28. This main body is peripherally bounded by a skirt 90 of Teflon (polytetrafluorethylene) or other suitable plastics material providing low-friction sliding engagement with the inner wall of the cylinder tube 16.

Mounted for axial rotational movement within the confines of the main body 88 of the piston assembly 28 is a rotatable disc-like orifice selector plate 92 having an upstanding neck 94 received in the end of a large-diameter counterbore 80 in the lower end of the piston rod 30. In addition to the rotatable orifice selector plate 92, the main body 88 of the piston assembly 28 houses a cylindrical, relatively thick fixed orifice plate 98 that interfaces with the lower surface of the selector plate 92. The orifice plate 98 is peripherally secured therein between an inner locator ring 100 and an inwardly coined lower annular end 102 of the main body 88.

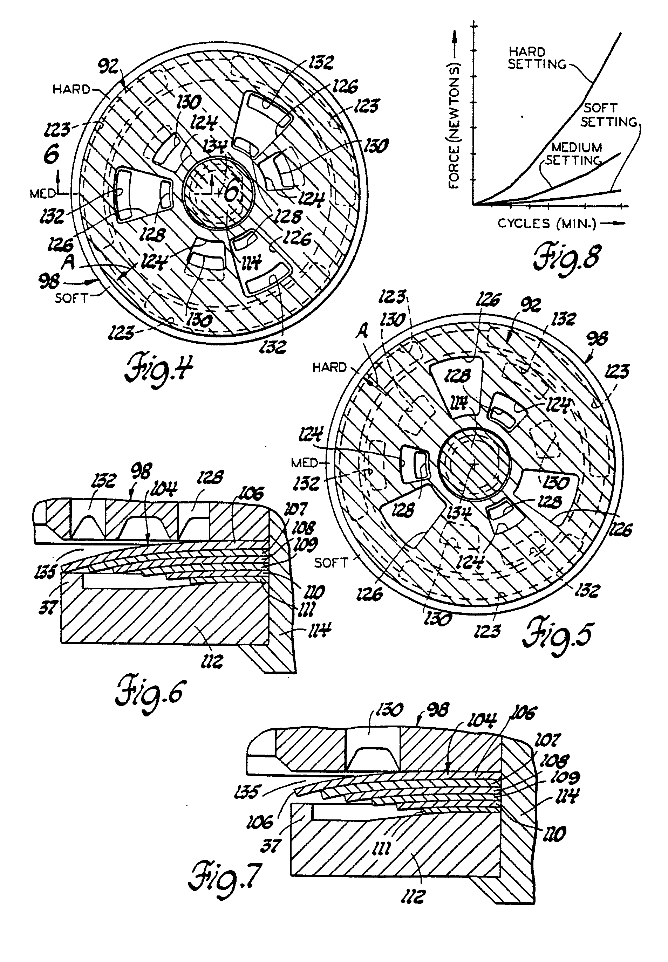

A valve spring disc pack 104 comprising a series of flat washer-like valve discs 106, 107, 108, 109, 110 and 111 made of spring steel and having decreasing diameters, from the top to the bottom, is mounted adjacent the orifice plate to deflect downwardly to different positions during a rebound stroke in response to the force of jets of hydraulic fluid thereon, to thereby control fluid flow through the selector plate 92 and orifice plate 98 as further described below. The spring disc pack 104 is held in an operative position between a contoured fulcrum (backing) plate 112 and the orifice plate 98 by a central rivet 114, as shown in Figure 2.

The selector plate 92 is rotatably mounted within the cavity of the main body 88. An annular wavy return spring 118 operatively mounted between an inner surface 120 forming the top of the cavity of the main body 88 and the upper surface 122 of the selector plate 92 biases the selector plate into engagement with the orifice plate 98 under certain operating conditions. During a compression stroke, the selector plate 92 is forced upwardly against the bias of the spring 118 so that oil can flow through the piston assembly 28 via outer orifices 123 for checking the compression stroke.

The selector plate 92 has first and second sets of three arcuately spaced and radially extending openings (windows) 124 and 126 therethrough for controlling the flow of shock absorber fluid through first, second and third sets of orifices 128, 130 and 132 formed in the orifice plate 98. The first set of orifices 128 is located at the smallest radial distance from the centre 134 of the orifice plate 98, whereas the second and third sets are respectively located at larger radial distances from the centre 134.

By rotation of the selector plate 92 to selected positions, various combinations of flow control orifices can be chosen to set the rebound damping characteristics of the shock absorber to meet the operator's requirements and demands. For example, if the selector plate 92 is rotated to the Figure 3 position, in which the selector plate openings (windows) 126 uncover the orifice 130 in the orifice plate 98, damper oil can impinge on the spring disc pack 104 to provide the degree of deflection illustrated in Figure 7, so that the shock absorber has a selected intermediate degree of spring damping. The clearance opening 135 between the bottom of the orifice plate 98 and the uppermost valve disc 106 acts in series with the open flow control orifice 130 to provide the restriction for flow control through the piston assembly.

In the event that the operator desires a softer ride, the damper plate is rotated clockwise or counterclockwise from the Figure 3 position until the windows 126 are aligned with the orifices 128 and 132 and the windows 124 are aligned with the orifices 130 shown in Figure 4, the arrow A thereby being at the soft ride position. In this condition, all orifices are open and the sum of the forces of rebound fluid is moved further out on the lever arm provided by the plates of the disc pack 104. As is illustrated in Figure 6, the fluid forces on the valve disc pack 104 are highest and the disc pack will be subjected to its greatest deflection on the rebound stroke. Under such conditions, with the upper valve disk 106 grounding on the annular wall 37 of the backing plate 112, the flow through the piston valving is maximized, so that the damping capability of the shock absorber is reduced and piston velocity on the rebound stroke is increased and the ride is accordingly softer.

If a hard ride is desired the selector plate may be selectively rotated to the Figure 5 position so that only the orifices 128 are uncovered by the windows 124, the indicator arrow A thereby being at the hard ride position. During rebound, flow through the windows 124 and orifices 128 will impinge on the spring disc pack 104 at a position closer to the centre 134. Under such conditions, spring plate deflection is a minimum and rebound valve restriction is a maximum. With this high restriction, resistance to piston movement is increased, and the suspension spring rate is in effect increased, so that the ride is harder.

Figure 8 is a graph illustrating operation of the preferred embodiment of the invention shown in Figures 1 to 7 with the orifice size and disc pack 104 selected to provide, respectively, high resistance to piston movement for sports-car ride, medium resistance for standard operation and low resistance for highly cushioned boulevard ride.

During a compression stroke, with the piston assembly 28 moving downwardly, the fluid in the part of the cylinder tube 16 below the piston assembly 28 will flow through the outer restricted passages 123 to force the selector plate 92 upwardly, so deflecting the wave spring 118. Fluid flowing through the piston assembly 28 and into the cylinder tube 16 above the piston assembly 28 is heated by friction as it is squeezed through the restricted passages 123. Due to the change in the energy of the fluid into heat, the movement of the suspension springs is controlled during a jounce (compression) stroke.

Although a hydraulic damper in accordance with the present invention has been specifically described in terms of three sets of selected flow control orifices, it is alternatively possible for additional sets to be provided, so that flow rates through the piston on rebound can be further varied for further tailoring of the shock absorber action.

## Claims

1. A hydraulic damping unit for controlling the spring action of vehicle suspension springs, comprising a cylinder tube (16) having a hydraulic fluid therein, a valved piston assembly (28) mounted for linear reciprocation movement in the cylinder tube (16) and hydraulically separating the cylinder tube into first and second chambers, valve means in the piston for controlling the flow of hydraulic fluid between the chambers through the piston assembly (28), a piston rod (30) extending from the piston assembly (28) to the exterior of the damping unit (10), a rotatable actuator (64) extending within the piston rod (30), and valving means (98, 92, 104) mounted in the piston assembly (28) for selectively opening and closing a plurality of flow-control orifices (128, 130, 132) for varying and controlling the damping action of the unit (10), said valve means comprising an orifice plate (98) fixed in the piston assembly (28) and having a plurality of flow-control orifices (128, 130, 132) therethrough, a selector plate (92) rotatably mounted in the piston assembly (28) and connected to the actuator (64) for rotation thereby for selectively opening and closing the flow-control orifices (128, 130, 132) for varying and controlling the damping action of the unit (10), and a deflectable disc-shaped valve member (104) formed from a plurality of deflectable valve discs (106, 107, 108, 109, 110, 111) centrally secured at a connection to the orifice plate (98) at one side thereof, which discs, on a linear movement extending the damping unit (10), are deflectable from an initial flattened condition of the valve discs (106, 107, 108, 109, 110, 111) in which the flow-control orifices (128, 130, 132) are fully covered to predetermined deflected positions effective to establish a selectively variable flow control restriction (135) between the valve discs (106, 107, 108, 109, 110, 111) and the orifice plate (98), to control the rate of flow of fluid through the piston assembly (28) and thereby the spring-damping characteristics of the hydraulic damping unit (10), characterised in that the flow-control orifices (128, 130, 132) are respectively located at increasing radial distances from the centre (134) of the valve discs (104).

2. A hydraulic damping unit according to claim 1, characterised in that the piston assembly (28) has a shell-like housing means (88) mounting the selector plate (92), and the deflectable valve discs (106, 107, 108, 109, 110, 111) are secured at a central location to the orifice plate (98) and adjacent the lower side of the same to initially resiliently cover the orifices (128, 130, 132).

3. A hydraulic damping unit according to claim 1 or 2, characterised in that the selector plate (92) is linearly movable axially with respect to the orifice plate (98) and is biased thereagainst by spring means (118).

## Patentansprüche

1. Hydraulische Dämpfungseinheit zur Steuerung der Federwirkung von Federn einer Kraftfahrzeugaufhängung, mit einem Zylinderrohr (16) mit einem darin befindlichen Hydraulikfluid, einer mit Ventilen versehenen Kolbenanordnung (28), die linear hin- und herbewegbar in dem Zylinderrohr (16) angebracht ist und das Zylinderrohr hydraulisch in erste und zweite Kammern unterteilt, Ventilmitteln im Kolben zur Steuerung der Strömung von Hydraulikfluid zwischen den Kammern durch die Kolbenanordnung (28), einer sich von der Kolbenanordnung (28) bis außerhalb der Dämpfereinheit (10) erstreckenden Kolbenstange (30), einem drehbaren Betätiger (64), der sich innerhalb der Kolbenstange (30) erstreckt, und in der Kolbenanordnung (28) angebrachten Ventilmitteln (98, 92, 104) zum wahlweisen Öffnen und Schließen einer Vielzahl von Mündungen (128, 130, 132) zur Strömungssteuerung zum Verändern und Steuern der Dämpfungswirkung der Einheit, wobei das Ventilmittel eine in der Kolbenanordnung (28) befestigte Mundstückplatte (98) mit einer Vielzahl von durchgehenden Strömungssteuermündungen (128, 130, 132) besitzt, eine Wahlplatte (98) in der Kolbenanordnung (28) drehbar befestigt und mit dem Betätiger (64) zur Drehung durch diesen verbunden ist zum selektiven Öffnen und Schließen der Strömungssteuermündungen (128, 130, 132) zum Verändern und Steuern der Dämpfungswirkungen der Einheit (10), und ein abbiegbares scheibenförmiges Ventilglied (104) aus einer Vielzahl von ablenkbaren Ventilscheiben (106, 107, 108, 109, 110, 111) zentral an einer Verbindung mit der Mündungsplatte (98) an einer Seite derselben sicher befestigt ist, welche Scheiben bei einer Linearbewegung, die sich in der Dämpfereinheit (10) erstreckt, von einem anfänglichen ebenen Zustand der Ventilscheiben (106, 107, 108, 109, 110, 111), bei dem die Strömungssteuermündungen (128, 130, 132) vollständig bedeckt sind, zu vorbestimmten abgebogenen Lagen abbiegbar sind, um eine wahlweise veränderbare Strömungssteuerungsverengung (135) zwischen den Ventilscheiben (106, 107, 108, 109, 110, 111) und der Mündungsplatte (98) zu erreichen, um die Fluid-Strömungsrate durch die Kolbenanordnung (28) und dadurch die Federungs-Dämpfeigenschaften der hydraulischen Dämpfereinheit (10) zu steuern, dadurch gekennzeichnet, daß die Strömungssteuer-Mündungen (128, 130, 132) jeweils mit zunehmenden Radialabständen von dem Zentrum (134) der Ventilscheiben (104) angeordnet sind.

2. Hydraulische Dämpfungseinheit nach Anspruch 1, dadurch gekennzeichnet, daß die Kolbenanordnung (28) ein mantelartiges Gehäusemittel (88) besitzt zum Anbringen der Wahlplatte (92), und daß die abbiegbaren Ventilscheiben (106, 107, 108, 110, 111) an einer zentralen Stelle an der Mündungsplatte (98) und benachbart zur unteren Seite derselben befestigt sind, um anfangs die Mündungen (128, 130, 132) elastisch zu bedecken.

3. Hydraulische Dämpfungseinheit nach Anspruch 1 oder 2, dadurch gekennzeichnet, daß die Wahlplatte (92) linear in Axialrichtung bezüglich der Mündungsplatte (98) bewegbar und dagegen durch Federmittel (118) vorgespannt ist.

## Revendications

1. Ensemble d'amortissement hydraulique destiné au réglage de l'action élastique de ressorts de suspension d'un véhicule, comprenant un tube cylindrique (16) contenant un fluide hydraulique, un ensemble (28) à piston à soupapes monté de manière qu'il se déplace linéairement en translation dans le tube cylindrique (16) et séparant hydrauliquement le tube cylindrique en une première et une seconde chambre, un dispositif à soupapes placé dans le piston et destiné à régler l'écoulement du fluide hydraulique entre les chambres à travers l'ensemble à piston (28), une tige de piston (30) dépassant de l'ensemble à piston (28) et rejoignant l'extérieur de l'ensemble d'amortissement (10), un actionneur rotatif (64) disposé dans la tige du piston (30), et un dispositif à soupape (98, 92, 104) monté dans l'ensemble à piston (28) et destiné à ouvrir et fermer sélectivement plusieurs orifices (128, 130, 132) de réglage de débit destinés à faire varier et régler l'action d'amortissement de l'ensemble (10), le dispositif à soupapes comprenant une plaque (98) à orifices fixée dans l'ensemble à piston (28) et ayant plusieurs orifices (128, 130, 132) de réglage de débit qui la traversent, une plaque sélectrice (92) montée afin qu'elle puisse tourner dans l'ensemble à piston (28) et raccordée à l'actionneur (64) afin qu'elle tourne avec celui-ci et assure l'ouverture et la fermeture sélective des ouvertures (128, 130, 132) de réglage de débit afin que l'action d'amortissement de l'ensemble (10) soit modifiée et réglée, et un organe d'obturation (104) en forme de disque qui peut fléchir, formé de plusieurs disques (106, 107, 108, 109, 110, 111) formant soupapes et fixé au centre par une connexion à la plaque à orifices (98) d'un côté de celle-ci, les disques, lors d'un déplacement linéaire correspondant à un allongement de l'ensemble d'amortissement (10), pouvant fléchir à partir d'un état initial aplati des disques de soupapes (106, 107, 108, 109, 110, 111) dans lequel les orifices (128, 130, 132) de réglage de débit sont totalement couverts à des positions fléchies prédéterminées établissant un rétrécissement (135) de réglage de débit, variant sélectivement, entre les disques de soupapes (106, 107, 108, 109, 110, 111) et la plaque à orifices (98), afin que le débit de fluide dans l'ensemble à piston (28) soit réglé et que les caractéristiques d'amortissement élastique de l'ensemble d'amortissement hydraulique (10) soient ainsi réglées, caractérisé en ce que les orifices (128, 130, 132) de réglage de débit sont placés respectivement à des distances radiales croissantes depuis le centre (134) des disques de soupapes (104).

2. Ensemble d'amortissement hydraulique selon la revendication 1, caractérisé en ce que l'ensemble à piston (28) a un dispositif (88) formant un boîtier analogue à une enveloppe de montage de la plaque sélectrice (92), et les disques de soupapes (106, 107, 108, 109, 110, 111) qui peuvent fléchir sont fixés à un emplacement central sur la plaque à orifices (98) et prés de la face inférieure de celle-ci de manière qu'ils recouvrent initialement les orifices (128, 130, 132) de manière élastique.

3. Ensemble d'amortissement hydraulique selon la revendication 1 ou 2, caractérisé en ce que la plaque sélectrice (92) est mobile linéairement et axialement par rapport à la plaque à orifices (98) et est rappelée élastiquement contre celle-ci par un dispositif à ressort (118).

Fig.1

Fig.2

Fig.3

1

Fig.4

Fig.8

Fig.5

Fig.6

Fig.7